# EUROPÄISCHE PATENTANMELDUNG

(11) **EP 0 545 022 A1**
(43) Veröffentlichungstag der Anmeldung: **09.06.1993**
(21) Anmeldenummer: 92116991.8
(22) Anmeldetag: 05.10.1992
(51) Int. Cl.: E06B 3/66

(54) **Abstandhalteeinrichtung für eine transparente Isoliereinrichtung**

(30) Priorität: 26.11.1991 DE 9114709 U
(71) Anmelder: Helmut Lingemann GmbH & Co., D-42111 Wuppertal (DE)
(72) Erfinder: Brede, Peter, W-5609 Hückeswagen (DE)
(74) Vertreter: Patentanwälte Dr. Solf & Zapf

(57) **Zusammenfassung**

Im Zwischenraum (2) zwischen zwei Glasscheiben (3,4) ist ein transparentes Isolationsmaterial und gegebenenfalls eine bewegbare Schutzeinrichtung gegen Überhitzung angeordnet, wobei die Glasscheiben (3,4) im Randbereich (5) rahmenförmig eingefaßt und mit der Abstandhalteeinrichtung (6) auf Abstand gehalten sind, gekennzeichnet durch zwei mit Abstand zueinander angeordnete, an den Glasscheiben (3,4) angrenzende Abstandhalteprofilrohre (7,8) und eine im Zwischenraum (11) zwischen den Profilrohren (7,8) angeordnete, reversibel elastisch verformbare Dehneinrichtung (12).

## Beschreibung

Die Erfindung betrifft eine Abstandhalteeinrichtung für eine transparente Isoliereinrichtung, in der im Zwischenraum zwischen zwei Glasscheiben ein transparentes Isolationsmaterial und ggf. eine bewegbare Schutzeinrichtung gegen Überhitzung angeordnet sind, wobei die Glasscheiben im Randbereich rahmenförmig eingefaßt und mit der Abstandhalteeinrichtung auf Abstand gehalten sind.

Derartige transparente Isoliereinrichtungen sollen die Strahlungsenergie der Sonne in Wärmeenergie umwandeln. Die Wärmeenergie wird gewonnen und als Energiequelle verwendet. Prinzip und Grundwissen über transparente Isoliereinrichtungen werden z.B. in der Druckschrift der Fraunhofer Gesellschaft "Transparent Isolation Technology for Solar Energy Conversion", Fraunhofer-Institut für Solare Energiesysteme, Direktor: Prof. Dr. A. Goetzberger (c) 1989, 1991, 2. Edition, Seiten 1- 40, beschrieben.

Die im Luftzwischenraum zwischen den Glasscheiben häufig auftretenden Temperaturschwankungen verursachen eine Art Pumpbewegung der Glasscheiben, bei der sich die Glasscheiben aufeinander zu und voneinander weg bewegen. Dabei sollen die Abstandhalteeinrichtungen diese Bewegungen ohne besonderen Widerstand auffangen können, ohne daß der Verbund zwischen den Glasscheiben darunter leidet. Dies ist bis heute noch nicht befriedigend gelungen. Die bekannten Einrichtungen sind zu starr und überstehen nur relativ wenige Bewegungsspiele (Pumpbewegungen).

Aufgabe der Erfindung ist, eine Abstandhalteeinrichtung zu schaffen, die Pumpbewegungen nahezu unbegrenzt übersteht, ohne daß der Verbund zwischen den Glasscheiben darunter leidet.

Diese Aufgabe wird durch die Merkmale des Anspruchs 1 gelöst. Vorteilhafte Weiterbildungen der Erfindung werden in den Unteransprüchen gekennzeichnet. Anhand der Zeichnung wird die Erfindung im folgenden beispielhaft näher erläutert. Es zeigen:
- Fig. 1: schematisch im Querschnitt eine Abstandhalteeinrichtung einer transparenten Isoliereinrichtung;
- Fig. 2: einen Querschnitt durch die Dehnprofile der Abstandhalteeinrichtung nach Fig. 1;
- Fig. 3: schematisch im Querschnitt eine weitere Abstandhalteeinrichtung einer transparenten Isoliereinrichtung;
- Fig. 4: einen Querschnitt durch das Dehnprofil mit Abstandhalterprofilrohr der Abstandhalteeinrichtung nach Fig. 3.
- Fig. 5: eine weitere Ausführungsform eines Dehnprofils.

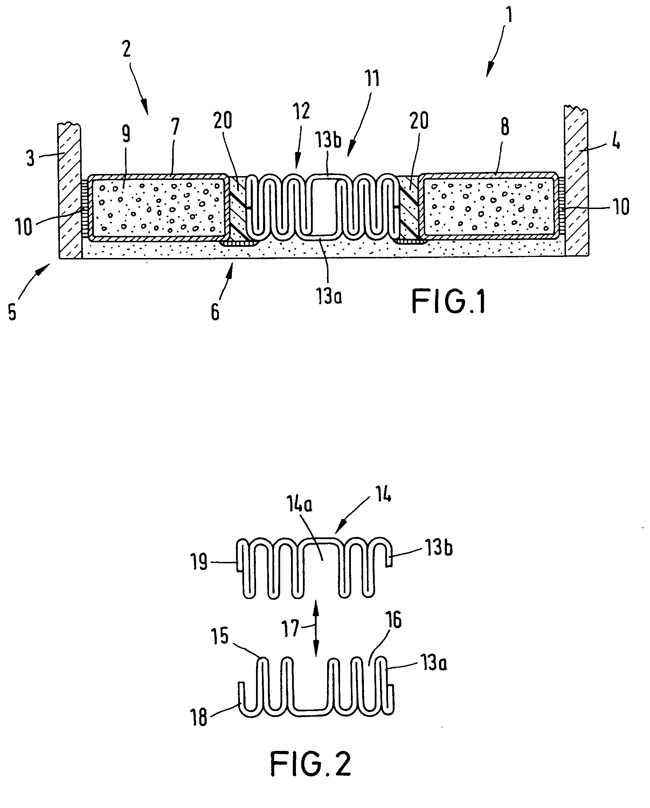

Der in Fig. 1 dargestellte Teilbereich der transparenten Isoliereinrichtung 1 zeigt nicht das im Zwischenraum 2 zwischen den Glasscheiben 3, 4 angeordnete transparente Isolationsmaterial und nicht die ggf. vorhandene Schutzeinrichtung, die einem bekannten Aufbau entsprechen.

Im Randbereich 5 der transparenten Isoliereinrichtung 1 wird der Zwischenraum 2 zwischen den Glasscheiben 3, 4 umlaufend durch eine Abstandhalteeinrichtung 6 überbrückt. Von außen wird die transparente Isoliereinrichtung 1 von einer ebenfalls nicht dargestellten üblichen Rahmenkonstruktion eingefaßt gelagert.

Die Abstandhalteeinrichtung 6 nach Fig. 1 besteht aus zwei parallel im Abstand voneinander angeordneten Abstandhalteprofilrohren 7,8, die denen gleichen, die in Isolierverglasungen üblicher Bauart verwendet werden und z.B. aus Aluminium bestehen und mit Trockenmittel 9 gefüllt sein können, wobei Öffnungen in den Wandungen der Rohre 7, 8 in an sich bekannter Weise eine Verbindung des Trockenmittelraums zum Zwischenraum 2 gewährleisten.

Zwischen den Innenflächen der Glasscheiben 3, 4 und den außenliegenden Seitenwandungen der Abstandhalteprofilrohre 7, 8 ist zweckmäßigerweise wie üblich ein Butylband 10 vorgesehen.

Wesentlich ist, daß im Zwischenraum 11 zwischen den Abstandhalteprofilrohren 7, 8 eine Dehneinrichtung 12 angeordnet ist, die die Pumpbewegung durch reversible elastische Verformungen aufnehmen kann. Die Dehneinrichtung 12 ist gemäß Fig. 1 aufgebaut aus zwei gleichgeformten, stabförmigen Dehnprofilen 13a, 13b (s. Fig. 2), z.B.. aus Metall, insbesondere aus Aluminium.

Jedes Dehnprofil 13a, 13b ist gemäß Fig. 2 einstückig aus einem Metallband hergestellt, u. z. durch seitliche in Längsrichtung des Bandes verlaufende Faltungen 15, wobei zwischen den Faltungen 15 Rillen 16, z.B. U-förmige Rillen verblieben sind. Im Längsmittenbereich jeden Dehnprofils 13a, 13b ist eine breitere Rille 14a mit einem breiten Bodensteg 14 vorgesehen, deren Funktion weiter unter beschrieben wird. Z.B. sind - wie abgebildet - zwei Faltungen 15 auf der einen Seite und drei Faltungen 15 auf der anderen Seite des Bodenstegs 14 des Dehnprofils 13a, 13b vorgesehen.

Die Dehnprofile 13a, 13b können in der Dehneinrichtung 12 umlaufend geschlossen ausgebildet sein. Es können aber auch lediglich auf Abstand voneinander angeordnete Dehnprofilstücke verwendet werden.

Die Dehnprofile 13a und 13b werden kammartig ineinander gesteckt und bilden derart die Dehneinrichtung 12. Ihre Position im gegenseitigen Kammeingriff nehmen die Dehnprofile 13a und 13b dergestalt ein, daß die Faltungen 5 des Dehnprofils 13a jeweils angrenzen an benachbarte Faltungen 15 des anderen Dehnprofils 13b, wobei die Faltungen 15 der beiden Dehnprofile innerhalb der Dehneinrichtung 12 alternierend aufeinanderfolgend angeordnet sind. Wie aus Fig. 1 hervorgeht, ergibt sich durch den gegenseitigen Kammeingriff der Dehnprofile, bis auf den Bereich der zentralen weiteren Rillen 14a, eine lückenlose Folge der Faltungen 14. In welcher Gestalt der Kammeingriff zustandekommt, geht am besten aus Fig. 2 hervor, in der die beiden Dehnprofile 13a, 13b einander gegenüberliegend angeordnet sind. Aus dieser Ausgangsstellung werden die beiden Dehnprofile 13a, 13b in Richtung des Pfeils 17 ineinandergeschoben oder ineinandergesetzt. Die Formschlußverbindung zwischen den beiden Dehnprofilen 13a und 13b erfolgt aus einer Ausgangsstellung heraus, in welcher jeweils die drei Faltungen des einen Dehnprofils den zwei Faltungen des anderen Dehnprofils gegenüberliegen.

Die seitlichen Enden der Dehnprofile 13a, 13b sind unterschiedlich gestaltet, wobei das eine Profilende 18 in Richtung der vorausgehenden Faltung 15 mit Abstand zu dieser abgebogen ist und etwa die halbe Höhe der Faltungen 15 aufweist. Das andere Ende 19 der Dehnprofile 13a, 13b ist im wesentlichen gleich lang wie das Ende 18, und wie dieses von der vorausgehenden Faltung abgebogen, liegt jedoch ohne Zwischenraum direkt an der Außenseite dieser Faltung an.

Werden nun die Dehnprofile 13a, 13b in der in Fig. 2 gezeigten Weise angeordnet und ineinander geschoben, so gelangt die dem Ende 19 vorausgehende Faltung des einen Dehnprofils in Eingriff zwischen dem Ende 18 und der vorausgehenden Faltung 15 des anderen Dehnprofils, wobei die Enden 18 und 19 mit ihren freien Kanten aneinanderstoßen und derart eine glatte Außenfläche bilden. Auf diese Weise weist also die Dehneinrichtung 12 beidseitig glatte Wandungen auf.

Die Anbindung der Dehneinrichtung 12 an die außengelegenen Rohre 7, 8 erfolgt über diese glatten Wandungen durch eine Polyurethan-Vergußmasse 20. Nachdem die Dehneinrichtung 12 mittig zwischen die Rohre 7 und 8 eingesetzt worden ist, verbleiben zwischen der Dehneinrichtung und den angrenzenden Rohren Zwischenräume, in welche Polyurethan eingegossen wird. Nach dem Aushärten bildet diese Masse die umlaufenden Stege 20. Die Polyurethan-Masse, die selbst nicht elastisch ist, haftet fest am Material der Rohre 7, 8, die bevorzugt aus Aluminium bestehen.

Bevorzugt kommt eine Polyurethan-Vergußmasse zum Einsatz, die aus einer Mischung aus einer fertig formulierten phaseninstabilen niedrigviskosen Polyol-Formulierung besteht, die ein wasserbindendes Zusatzmittel enthält (Bydur VP PU 1397), und mit einem flüssigen, lösungsmittelfreien Diphenylmethan-4,4'-Diisocyanat mit einem Gehalt an isomeren und höherfunktionellen Homologen (Desmodur 44 V 10 B oder Desmodur 44 V 20 B) hergestellt ist (Bydur: Hersteller Bayer AG; Desmodur: Hersteller Bayer AG). Wesentlich ist, daß die Polyurethan-Stege 20 in sich verwindungssteif und nicht elastisch verformbar sind, so daß die angestrebte Elastizität der Abstandhalteeinrichtung 6 ausschließlich aus der Elastizität der Dehneinrichtung 12 basiert. Die Elastizität der Abstandhalteeinrichtung wird deshalb ausschließlich erreicht durch die im wesentlichen ziehharmonikaartige Ausbildung der Dehneinrichtung 12, wobei die im Einbauzustand eng aneinanderliegenden Faltungen der Dehnprofile 13a und 13b bei zunehmender Erwärmung der Umgebung sich zu entfalten vermögen derart, daß die innerhalb jeder Faltung aneinandergrenzenden Materiallappen mehr oder weniger stark voneinander abrücken. Diese unter Wärmeeinfluß stattfindende Entfaltung verläuft bei zunehmender Abkühlung reversibel, so daß die Faltungen schließlich wieder ihre eng aneinanderliegende Position mit Bezug auf die einzelnen Faltungslappen einnimmt, wie sie in Fig. 1 dargestellt ist. Diese elastische Verformung der Dehneinrichtung 12 gestattet es den Glasscheiben 3 und 4 bei sich ändernden Temperaturen spannungsfrei gegeneinander zu arbeiten.

Darüber hinaus ist im zentralen Dehneinrichtung 12 eine Stauchzone ausgebildet, die von den zentralen breiteren Rillen 14a und den zugehörigen zentralen breiten Bodenstegen 14 gebildet wird. Der mögliche Stauchhub ist festgelegt durch den Abstand der einander gegenüberliegenden Faltungen im Bereich der Rillen 14a. Eine Stauchung verläuft dabei derart, daß die in vertikaler Richtung einander gegenüberliegenden Bodenstege 14 der beiden Dehnprofile 13a, 13b innerhalb der Dehneinrichtung 12 aus- oder eingebuchtet werden, wobei diese Aus- oder Einbuchtung rückgängig gemacht wird, wenn die durch tiefere Temperaturen bewirkte Stauchung durch Ansteigen der Umgebungstemperaturen wieder aufgelöst wird.

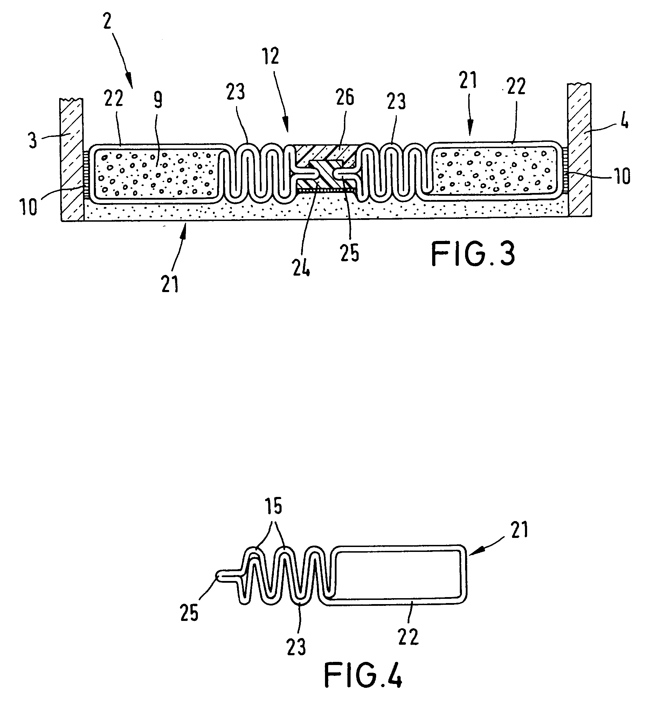

Die in Fig. 3 gezeigt Ausführungsform der Abstandhalteeinrichtung unterscheidet sich von derjenigen nach Fig. 1 dadurch, daß jeweils ein Teil der Dehneinrichtung 12 materialeinheitlich ausgebildet ist mit dem Rohr 7 bzw. dem Rohr 8. In Fig. 4 ist ein solches Rohr-Dehneinrichtungs-Element 21 im nicht eingebauten und nicht mit dem Trockenmittel 9 befühlten Zustand dargestellt. Dabei wird deutlich, daß das Element 21 aus einem einzigen Blechstreifen gebogen und gefaltet ist, wobei der Rohrteil 22 in seiner Gestalt den Rohren 7 und 8 von Fig. 1 entspricht. Das Dehnprofilteil 23, das sich an einer Seite an den Rohrteil 22 anschließt, besteht aus dem ziehharmonikaartig gefalteten Blechstreifenfortsatz des Rohrteils 22 und umfaßt eine Doppellage des gefalteten Blechs. Die Faltung ist im Gegensatz zu dem Ausführungsbeispiel gemäß Fig. 1 so vorgenommen, daß aneinandergrenzende Faltungen winkelig zueinander angeordnet sind. Auf diese Weise vermögen die Faltungen 15 des Dehnprofilsteils 23 ähnlich wie eine Druckfeder unter Komprimierung des Dehnprofilsteils 23 aufeinander zu gedrängt zu werden, bis die Faltungen 15 im wesentlichen parallel zueinander verlaufen und Wand an Wand aneinander anliegen. Diese komprimierte Form nehmen die Dehnprofilteile 23 ein, wenn sie bestimmungsgemäß einander gegenüberliegend mit den außenliegenden Rohrteilen 22 zwischen die Scheiben 3 und 4 eingesetzt sind. Erreicht wird die Kompression der Dehnprofilteile 23 durch ein Abstandsprofil 24 aus Polyurethan, das zwischen die einander gegenüberliegenden Stirnseiten der Dehnprofilteile 23 eingesetzt wird und mit diesen in Eingriff gelangt über umlaufende seitliche Nuten im Abstandsteil 24, in welche an den Dehnprofilteilen 23 ausgebildete Nasen 25 formschlüssig eingreifen. Der unterhalb der Nasen 25 liegende Zwischenraum zwischen den beiden einander gegenüberstehenden Dehnprofilteilen 23 ist durch den Abstandshalter 24 vollständig ausgefüllt, der sich mit einem Kopfteil in den gegenüberliegenden oberen Zwischenraum zwischen den Dehnprofilteilen 23 erstreckt. Der dort verbleibende Zwischenraum ist durch eine Polyurethan-Gießmasse 26 ausgefüllt. Im ausgehärteten Zustand bildet die PolyurethanGießmasse 26 zusammen mit dem darunter liegenden Abstandshalter 25 aus Polyurethan einen umlaufenden, festen, nicht verformbaren Steg, der an der plastischen Verformbarkeit der Dehneinrichtung nicht teilnimmt. Die plastische Ausdehnung der Dehneinrichtung in Fig. 3 erfolgt in ähnlicher Weise wie in Fig. 1 durch eine mehr oder weniger ausgeprägte Entfaltung der Falten 15 der Dehnprofilteile 23 unter Wärmeeinwirkung, wobei auch diese Entfaltung reversibel ist. Im dargestellten Ausführungsbeispiel erreichen die komprimiert eingesetzten Dehnprofilteile 23 bei einem Hub der gegenüberliegenden Glasscheiben 3, 4 von etwa 5 mm ihre in Fig. 4 dargestellte entspannte Position, in welcher die Faltung winkelig verläuft.

In den Fig. 1 und 3 grenzt an die Unterseite der Abstandhalteeinrichtung 6 ein Dichtstofflage an, und zwischen der Dichtstofflage und den Polyurethan-Stegen 20 bzw. dem Polyurethan-Abstandshalter 24 ist eine Lage aus Buthyl angeordnet.

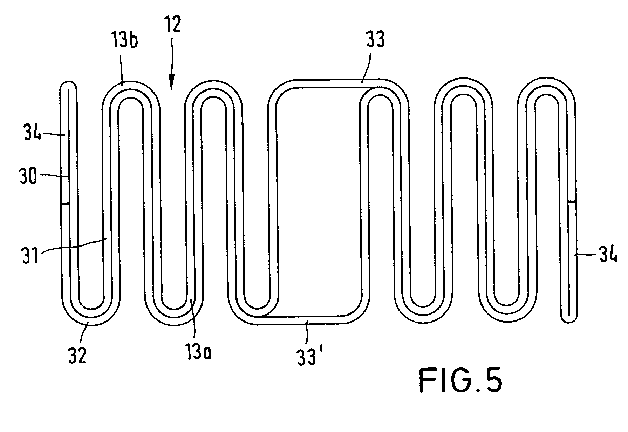

In Fig. 5 ist eine alternative Ausbildung der Dehneinrichtung 12 in Fig. 1 dargestellt. Dabei besteht die Dehneinrichtung 12 wiederum aus zwei identisch ausgebildeten Dehnprofil 13a und 13b. Die Faltungen sind hier jedoch meanderförmig mit Abstand angelegt. Die Faltungen der Dehnprofile 13a, 13b bestehen jeweils aus einander gegenüberliegenden geradlinig verlaufenden Abschnitten 30 und 31 und einem diese Abschnitte verbindenden gebogenen Abschnitt 32, wobei der Biegeradius im Bereich der Abschnitte 32 so gewählt ist, daß die einander gegenüberliegenden geradlinigen Abschnitte 30 und 31 einen vorgegebenen Abstand zueinander aufweisen. Im zentralen Bereich jedes Dehnprofils 13a, 13b ist anstelle des gebogenen Abschnitts 32 ein Stegabschnitt 33 vorgesehen, der im wesentlichen senkrecht zu den Faltungsabschnitten 30 und 31 verläuft, so daß sich im zentralen Bereich der Dehnprofile ein größerer Abstand der einander gegenüberliegenden geradlinigen Abschnitte 30 und 31 ergibt. Hierdurch wird eine Stauchzone gebildet ähnlich der Stauchzone der Dehneinrichtung 12 in Fig. 1. Außer innerhalb der Stauchzone liegen die Faltungsabschnitte 30, 31, 32 der beiden ineinander gesetzten Dehnprofile 13a, 13b eng aneinander an, und die Enden der Dehnprofile 13a, 13b werden von halbhohen, eng umgebogenen Abschnitten 34 gebildet, die mit entsprechend auf halber Höhe abgeschnittenen Abschnitten der Faltungen des benachbarten Dehnprofils Kante an Kante aneinander stoßen, so daß glatte Anschlußflächen zur Verfügung stehen, die in der bereits beschriebenen Weise mittels Polyurethan-Masse mit den außen liegenden Rohren 7 und 8 der Abstandhalteeinrichtung 6 verbindbar sind.

## Patentansprüche

**1.** Abstandhalteeinrichtung für eine transparente Isoliereinrichtung, in der im Zwischenraum zwischen zwei Glasscheiben ein transparentes Isolationsmaterial und gegebenenfalls eine bewegbare Schutzeinrichtung gegen Überhitzung angeordnet ist, wobei die Glasscheiben im Randbereich rahmenförmig eingefaßt und mit der Abstandhalteeinrichtung auf Abstand gehalten sind,
**gekennzeichnet** durch
zwei mit Abstand zueinander angeordnete, an die Glasscheiben (3, 4) angrenzende Abstandhalteprofilrohre (7, 8) und eine im Zwischenraum (11) zwischen den Profilrohren (7, 8) angeordnete, reversibel elastisch verformbare Dehneinrichtung (12).

**2.** Abstandhalteeinrichtung nach Anspruch 1,
dadurch **gekennzeichnet,**
daß die Dehneinrichtung (12) aus einem Metallband besteht, das quer zur Bandrichtung gefaltet ist.

**3.** Abstandhalteeinrichtung nach Anspruch 2,
dadurch **gekennzeichnet,**
daß die seitlich in Bandlängsrichtung verlaufenden Faltungen (15) im wesentlichen unmittelbar aneinandergrenzende Bandabschnitte umfassen.

**4.** Abstandhalteeinrichtung nach Anspruch 3,
dadurch **gekennzeichnet,**
daß im Längsmittelbereich der Dehneinrichtung (12) eine Stauchzone mit voneinander beabstandeten Bandabschnitten ausgebildet ist.

**5.** Abstandhalteeinrichtung nach Anspruch 3 oder 4,
dadurch **gekennzeichnet,**
daß die bandförmige gefaltete Dehneinrichtung (12) zwei Dehnprofile (13a, 13b) identischer Ausbildung umfaßt, die miteinander verzahnt angeordnet sind.

**6.** Abstandhalteeinrichtung nach Anspruch 5,
dadurch **gekennzeichnet,**
daß jedes Dehnprofil (13a, 13b) zwei außenliegende Abschnitte mit Rillen (16) zwischen aufeinanderfolgenden Faltungen (15) und einen Längsmittenbereich (Stauchzone) mit einer breiten, einen Bodensteg umfassenden Rille (14a) umfaßt.

**7.** Abstandhalteeinrichtung nach einem der Ansprüche 3 bis 6,
dadurch **gekennzeichnet,**
daß die Faltungen (15) im wesentlichen zick-zack-förmig ausgebildet sind, und daß die Dehneinrichtung (12) derart komprimiert in dem Abstandshalter angeordnet ist, daß der zick-zack-förmige Verlauf der Faltungen zugunsten im wesentlichen parallel zueinander verlaufender Faltungsabschnitte überwunden ist.

**8.** Abstandhalteeinrichtung nach einem der Ansprüche 2 bis 6,
**gekennzeichnet** durch
eine meanderförmige Faltung des Metallbandes.

**9.** Abstandhalteeinrichtung nach Anspruch 8,
dadurch **gekennzeichnet,**
daß zwischen benachbarten Faltungsabschnitten in Längsrichtung der Dehneinrichtung ein Abstand belassen ist.

**10.** Abstandhalteeinrichtung nach einem der Ansprüche 2 bis 9,
dadurch **gekennzeichnet,**
daß die Dehneinrichtung und die außenliegenden Profilrohre einstückig, vor allem aus einem gemeinsamen Metallband ausgebildet sind.

**11.** Abstandhalteeinrichtung nach einem der Ansprüche 2 bis 9,
dadurch **gekennzeichnet,**
daß jedes der außenliegenden Profilrohre (22) einteilig mit einer Hälfte der Dehneinrichtung (12) ausgebildet ist, und daß die beiden einander gegenüberliegenden Dehneinrichtungshälften (23) über eine starre Kopplungseinrichtung (24) miteinander fest verbunden sind.

**12.** Abstandhalteeinrichtung nach Anspruch 11,
dadurch **gekennzeichnet,**
daß die Kopplungseinrichtung (24) ein umlaufender Verbindungssteg ist, der seitliche Nuten aufweist, in denen die Dehneinrichtungshälften (23) verankert sind.

**12.** Abstandhalteeinrichtung nach Anspruch 12,
dadurch **gekennzeichnet,**
daß die Kopplungseinrichtung (24) aus Polyurethan besteht.

**14.** Abstandhalteeinrichtung nach einem der Ansprüche 2 bis 9,
dadurch **gekennzeichnet,**
daß die getrennt von den außenliegenden Profilrohren (7, 8) ausgebildete Dehneinrichtung (12) mit den Profilrohren fest verbunden ist.

**15.** Abstandhalteeinrichtung nach Anspruch 14,
dadurch **gekennzeichnet,**
daß die Dehneinrichtung (12) mit Abstand zu den Profilrohren (7, 8) angeordnet ist, und daß als Verbindungsmittel Polyurethan-Gießmasse in die Zwischenräume zwischen den Profilrohren und der Dehneinrichtung angeordnet ist.

**16.** Abstandhalteeinrichtung nach einem der Ansprüche 1 bis 15,
dadurch **gekennzeichnet,**
daß die Dehneinrichtung (12) und/oder die Profilabstandhalterohre (7, 8, 22) aus Aluminium besteht.

**17.** Abstandhalteeinrichtung nach einem der Ansprüche 1 bis 16,
dadurch **gekennzeichnet,**
daß die Glasscheiben (3, 4) über ein Butylband (10) mit den Profilrohren verbunden sind.

**18.** Abstandhalteeinrichtung nach Anspruch 13 oder 15,
dadurch **gekennzeichnet,**
daß zwischen der Polyurethan-Kopplungseinrichtung (24) bzw. dem Polyurethan-Verbindungsmittel und der angrenzenden Isoliereinrichtungsperipherie ein Butylband angeordnet ist.

**19.** Abstandhalteeinrichtung nach einem der Ansprüche 1 bis 18,
dadurch **gekennzeichnet,**
daß die Profilrohre (7, 8, 22) innenliegend perforiert und mit Trockenmittel (9) gefüllt sind.

**20.** Abstandhalteeinrichtung nach einem der Anspruche 1 bis 19,
dadurch **gekennzeichnet,**
daß sie für transparente Isoliereinrichtungen zum Umwandeln von Sonnenstrahlungsenergie in Wärmeenergie verwendet wird.
